# EUROPÄISCHE PATENTSCHRIFT

(11) **EP 0 987 132 B1**
(45) Veröffentlichungstag und Bekanntmachung des Hinweises auf die Patenterteilung: **22.06.2005**
(21) Anmeldenummer: 99117534.0
(22) Anmeldetag: 04.09.1999
(51) Int. Cl.: B60H 1/00

(54) **Anordnung zum Regeln der Innenraumtemperatur im Fahrgastraum eines Kraftfahrzeuges**
Device for regulating the temperature inside a passenger compartment of an automobile
Dispositif pour régler la température intérieure du compartiment passager d'un véhicule automobile

(30) Priorität: 18.09.1998 DE 19842895
(43) Veröffentlichungstag der Anmeldung: 22.03.2000
(73) Patentinhaber: Siemens Aktiengesellschaft, 80333 München (DE)
(72) Erfinder: Hinterwäller, Dieter, 55122 Mainz (DE); Jung, Jörg, 35415 Pohlheim (DE)

(56) Entgegenhaltungen:
- DE-A- 19 647 503
- US-A- 5 333 784
- US-A- 5 400 964

## Beschreibung

Die Erfindung betrifft eine Anordnung zum Regeln der Innenraumtemperatur im Fahrgastraum eines Kraftfahrzeuges, bei welcher die von einem Strahlungssensor detektierte tatsächliche Innenraumtemperatur einer Regelschaltung zugeführt wird, welche in Abhängigkeit von der gemessenen und einer vorgegebenen Temperatur die Innenraumtemperatur einstellt.

Bei Bediengeräten für die Steuerung von Klimaanlagen in Kraftfahrzeugen werden zur Messung der Innenraumtemperatur des Kraftfahrzeuges NTC-oder PTC- Elemente eingesetzt. Dabei wird mittels eines kleinem, leise laufendem Ventilators, die Innenluft aus dem Fahrgastraum angesaugt und mit der angesaugten Luft der Innenraumtemperaturfühler belüftet. Dieser Lüftermotor läuft, sobald z. B. ein Öffnungssignal der Zentralveriegelung, das Innenlicht oder die Standheizung aktiviert wird und dieses vom Klimasteuergerät erkannt wird. D. h. der Lüfter im Motor läuft bereits vor Einschalten der Zündung bzw. läuft nach Ausschalten der Zündung noch eine zeitlang weiter, um den Innenraumtemperaturfühler zu kühlen. Die dabei auftretende Geräuschbelästigung durch den Lüftermotor wird vom Fahrzeugnutzer als störend empfunden.

Aus der US-PS 53 33 784 ist ein Strahlungssensor zum Einsatz in Klimaanlagen eines Kraftfahrzeuges bekannt. Bei dieser Einrichtung wird das vom Strahlungssensor abgegebene, der Temperatur des Meßobjektes entsprechende elektrische Signal einem Mikroprozessor zugeführt, welcher die gewünschte Temperatur einer Einrichtung einstellt. Dies erfolgt durch Ansteuerung einer Heizung oder eines Gebläses.

Der Erfindung liegt die Aufgabe zu Grunde, eine Anordnung zum Regeln der Innenraumtemperatur im Fahrgastraum eines Kraftfahrzeuges anzugeben, bei welcher die Geräuschsbelästigung durch den Lüftermotor eliminiert wird und trotzdem eine zuverlässige Innenraumtemperaturregelung gewährleistet wird.

Erfindungsgemäß wird die Aufgabe dadurch gelöst, daß der Strahlungssensor auf eine die Regeleinrichtung tragenden Leiterplatte so angeordnet ist, daß eine sensitive Fläche des Strahlungssensors die Wärmestrahlung detektiert, welche auf eine dem Fahrgastraum zugewandte Außenfläche eines die Leiterplatte umschließenden Gehäuses auftrifft.

Der Vorteil der Erfindung besteht darin, daß aufgrund der Anordnung des Strahlungssensors in der Nähe der Außenfläche des Bedienteiles auf den Lüftermotor vollständig verzichtet werden kann. Neben dem Lüftermotor entfallen auch das Lüftungsgitter und Lüftungsstutzen. Die im Wageninnem vorherrschende Luftverteilung muß nun nicht mehr an die sensitive Fläche des Temperatursensors herangeführt werden.

Vorteilhafterweise ist der Strahlungssensor ein in einem Sensorgehäuse angeordneter Infrarotdetektor, wobei das Sensorgehäuse durch ein Strahlungsfilter abgeschlossen ist, welches der sensitiven Fläche des Strahlungssenors gegenüberliegt. Das Infrarotfilter, welches dazu dient, die einfallende Strahlung auf denjenigen Bereich des infraroten Spektrums zu begrenzen, bei dem der Sensor ein Maximum an Empfindlichkeit hat, bündelt somit die einfallende Strahlung.

In einem Sensorgehäuse ist als sensitive Fläche ein Thermopileelement angeordnet, dem ein Temperaturreferenzelement zugeordnet ist, wobei die vom Thermopileelement und dem Temperaturreferenzelement erzeugten elektrischen Signale über eine auf der Leiterplatte angeordnete Verstärkerelektronik an die Regelschaltung geführt sind. Bei der Verwendung eines Mikroprozessors als Auswerteschaltung wird sowohl das Sensorsignal als auch das Referenzelementsignal von diesem ausgewertet, wobei der Mikrorechner eine digitale Kompensation des Temperatursignals vollzieht. Bei dieser Anordnung ist sowohl der Sensor als auch die Auswerteschaltung voneinander getrennt aber beide auf der selben Leiterplatte angeordnet.

Die auf die Außenfläche des die Leiterplatte umschließenden Gehäuses auftreffende Wärmestrahlung wird über ein in die Außenfläche integriertes Strahlungsfilter erfaßt und auf die sensitive Fläche des Strahlungssensors weitergeleitet.

Je nach Filtermaterial besteht einmal die Möglichkeit, daß das Sensorgehäuse, den Rand der Leiterplatte in Richtung der Außenfläche des die Leiterplatte umgebenden Gehäuses überragt und das Infrarotfilter des Strahlungssensors zur Aufnahme der aus dem Fahrzeuginnenraum auftreffenden Strahlung in die Außenfläche des Gehäuses integriert ist.

Da die Außenfläche heutiger Bediengeräte bei Fahrzeug- Klimaanlagen aus Kunststoff besteht, ist es weiterhin möglich, daß der ebenfalls aus Kunststoff bestehende Strahlungsfilter einstückig mit der Außenfläche des die Leiterplatte umschließenden Gehäuses ausgebildet ist.

In einer Weiterbildung ist das Sensorgehäuse derart auf der Leiterplatte angeordnet, daß das Infrarotfilter des Strahlungssensors annähernd parallel zur Oberfläche der Leiterplatte verläuft, wobei in die Außenfläche des die Leiterplatte umschließenden Gehäuses ein zweites Infrarotfilter integriert ist, welches die auf die Außenfläche auftreffende Wärmestrahlung über eine in dem die Leiterplatte umschließenden Gehäuse angeordnete Wämestrahlungsumlenkeinrichtung auf das Infrarotfilter des Strahlungssensors führt. Diese Anordnung ist immer dann von Vorteil, wenn der Sensor nicht direkt am Meßort angebracht werden kann. Aufgrund der als Strahlumlenkeinrichtung genutzten Spiegeloptik wird die durch das zweite Infrarotfilter hindurchgelangte Wärmestrahlung direkt auf die Öffnung des Infrarotsensors gelenkt. Auch bei dieser Anordnung kann auf die Verwendung des Lüftermotors verzichtet werden, da die Strahlung mit optischen Mitteln zum Sensor befördert wird.

Um möglichst wenig Platz und Bauraum für die Spiegeloptik zu benötigen, ist die Wärmestrahlungsumlenkeinrichtung an dem die Leiterplatte umgebenden Gehäuse befestigt. Je nach räumlichen Vorgaben des Gerätes ist die Spiegeloptik an der Außenfläche des Bediengerätes oder an der zum Innenraum gerichteten Abdeckung des Bediengerätes angeordnet.

Es ist von besonderem Vorteil, wenn die Regeleinrichtung gleichzeitig die gesamte Heizungs-, Lüftungs- und Klimasteuerung des Kraftfahrzeuges wahrnimmt.

Um verschiedene Bereiche des Fahrgastinnenraumes auf unterschiedliche Temperaturen zu scannen, sind mehrere der beschriebenen Strahlungssensoren auf der Leiterplatte angeordnet.

Die Erfindung läßt zahlreiche Ausführungsmöglichkeiten zu. Eine davon soll anhand der in der Zeichnung dargestellten Figur näher erläutert werde.

Es zeigt:
- Figur 1:: Klimagerät eines Kraftfahrzeuges
- Figur 2:: Erste Ausführungsform der erfindungsgemäßen Anordnung
- Figur 3:: Zweite Ausführungsform der erfindungsgemäßen Anordnung
- Figur 4:: Blockschaltbild der Innentemperaturregelung
Gleiche Merkmale sind mit gleichen Bezugszeichen gekennzeichnet.

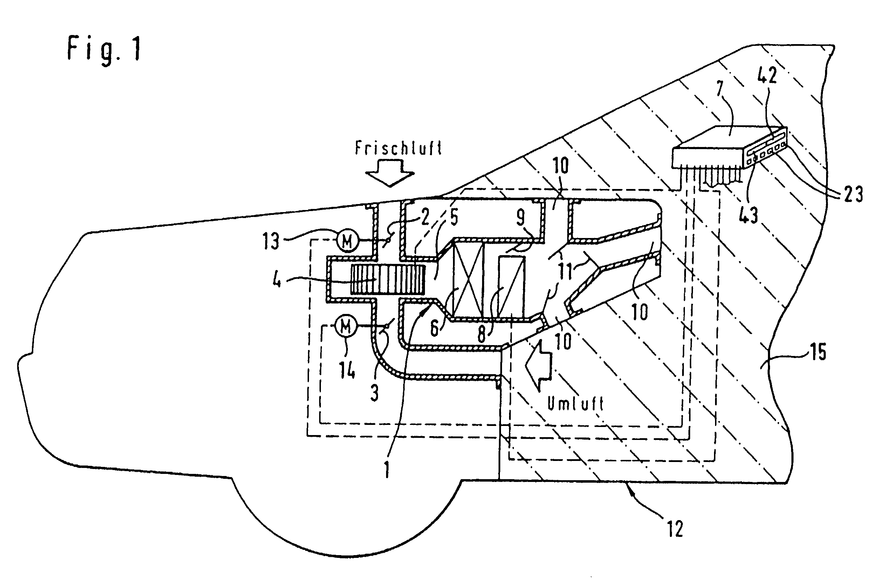

In Figur 1 ist das Klimagerät 1 eines Kraftfahrzeuges 12 in seiner konkreten Anordnung im Kraftfahrzeug dargestellt.

Über die Frischluftklappe 2, deren Stellung von einem Stellmotor 13 in Abhängigkeit von elektrischen Signalen gesteuert wird, die vom Klimasteuergerät 7 ausgegeben werden, wird Frischluft aus der Umgebung des Fahrzeuges in das Kraftfahrzeug 12 angesaugt.

Die Umluft aus dem Fahrgastraum des Kraftfahrzeuges wird über die Umluftklappe 3 vom Klimagerät 1 angesaugt. Auch die Stellung der Umluftklappe 3 wird in Abhängigkeit von elektrischen Signalen des Klimasteuergerätes 7 über einem Stellmotor 14 gesteuert. Über den Ventilator 4, dessen Geschwindigkeit durch das Klimasteuergerät 7 eingestellt wird, werden Um- und Frischluft in das Klimagerät 1 gefördert, wodurch hinter dem Ventilator 4 Mischluft 5 entsteht. Diese Mischluft 5 wird dem Verdampfer 6 zugeführt.

Im Kühlbetrieb wird die Mischluft 5 über Ausströmer 10 an den Fahrgastraum 15 abgegeben. Diese Ausströmer 10 sind in Kanälen angeordnet, die in Richtung Windschutzscheibe, in Richtung Fahrer bzw. Beifahrer und in Richtung des Fußbereiches des Fahrer bzw. Beifahrer weisen. Mittels der in den einzelnen Kanälen angeordneten Luftverteilerklappen 11, kann der Lufteintritt vom Fahrer bzw. Beifahrer reguliert werden.

An den Verdampfer 6 schließt sich ein Wärmetauscher 8 an. Die vom Verdampfer 6 abgegebene Luftmenge wird mit Hilfe einer Temperaturklappe 9 am Wärmetauscher 8 vorbeigeführt und dabei erwärmt. Im Heizbetrieb strömt dann die entsprechend temperierte Mischluft in den Fahrgastraum 15.

Das Klimasteuergerät 7 ist üblicherweise im oder in der Nähe des Amaturenbrettes des Fahrzeuges 12 angeordnet, so daß es problemlos vom Fahrer und Beifahrer während der Fahrt bedient werden kann.

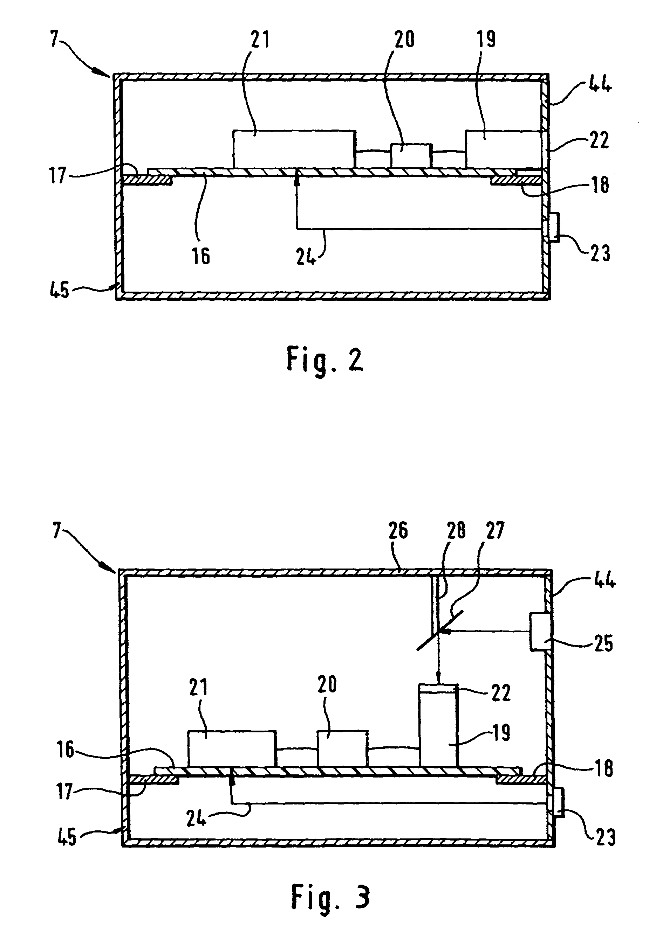

Der schematische Aufbau des Klimasteuergerätes ist in Figur 2 dargestellt. In einem Gehäuse 45 ist an den Halterungen 17 und 18 eine Leiterplatte 16 befestigt, auf welcher ein Infrarotsensor 19, eine Verstärkeranordnung 20 und ein Mikroprozessor 21 angeordnet sind. Der Infrarotsensor 19 ist elektrisch mit der Verstärkerschaltung 20 verbunden, welche wiederum an den Mikroprozessor 21 führt.

An der Frontplatte 44 des Gehäuses 45 ist in eine nicht weiter dargestellte Öffnung ein erstes Infrarotfilter 22 eingelassen, welches den Abschluß eines Sensorgehäuses bildet, in dem der Infrarotsensor 19 angeordnet ist. Weiterhin sind an der Frontplatte 44 Bedienelemente 23 angeordnet, mit denen der Fahrer bzw. der Beifahrer seinen Temperaturwunsch eingeben kann. Bei Betätigung eines Bedienelementes 23 wird ein elektrisches Signal über die elektrische Leitung 24 an den Mikroprozessor 21 gesendet. Die vom Fahrzeuginsassen gewünschte Innenraumtemperatur bewertet der Mikroprozessor 21 als Sollwertvorgabe.

Im vorliegenden Falle der Regelung der Innenraumtemperatur wird durch das Infrarotfilter 22 die auf die Frontplatte 44 des Klimagerätes 7 auftreffende Wärmestrahlung detektiert und der gefilterte Bestandteil der Wärme-strahlung vom Infrarotsensor 19 ausgewertet. Das der aktuellen Innenraumtemperatur entsprechende Sensorsignal wird durch den Verstärker 20 verstärkt und als Signal dem Mikroprozessor 21 zugeführt.

Der Mikroprozessor vergleicht den Sollwert mit der tatsächlich eingegebenen Temperatur und steuert in Abhängigkeit der Differenz zwischen beiden Werten die in Figur 1 dargestellten Einrichtungen Ventilator 4, Wärmetauscher 8 und/oder die Umluft- und Frischluftklappe 2 und 3 an, um so eine Temperatur einzustellen, die vom Fahrzeuginsassen gewünscht wird.

In Figur 3 ist eine weitere Ausführung der erfindungsgemäßen Lösung dargestellt. Sie unterscheidet sich von der Anordnung in Figur 2 dadurch, daß das Sensorelement 19 mit seinem Infrarotfilter 22 so auf der Leiterplatte 16 angeordnet ist, daß das Infrarotfilter 22 parallel zur Oberfläche der Leiterplatte 16 verläuft. In die Frontplatte 44 ist ein zweites Infrarotfilter 25 eingelassen, welches die auftreffende Wärmestrahlung wirkungsmäßig fokussiert. An der Abdeckung 26 des Klimasteuergerätes 7 ist über eine Halterung 28 eine Spiegeloptik 27 angeordnet. Diese Spiegeloptik 27 lenkt die durch das Infrarotfilter 25 hindurch gelassene Strahlung um und richtet sie auf das Infrarotfilter 22 des Strahlungssensors 19. Diese Anordnung ist besonders dann günstig, wenn der Sensor 19 aufgrund der räumlichen Gegebenheiten des Klimasteuergerätes 7 nicht direkt in die Frontplatte 44 eingelassen werden kann.

Der Infrarotfilter 22, 25 bestehen aus Materialien mit einem hohen Transmissionsgrad im Bereich des infarroten Spektrums, wie beispielsweise Silizium oder einer Kunststoffverbindung. Dabei übliche Wellenlängen, die von dem Infrarotfilter durchgelassen werden, liegen im Bereich von 4 bis 10 Mikrometer.

Insbesondere bei der Verwendung von Kunststoffen bietet es sich an, die Frontplatte 44 und das Infrarotfilter 22 (Figur 2) bzw. das Infrarotfilter 25 (Figur 3) einstückig auszubilden. Es ist somit direkt Fläche des Klimasteuergerätes 7.

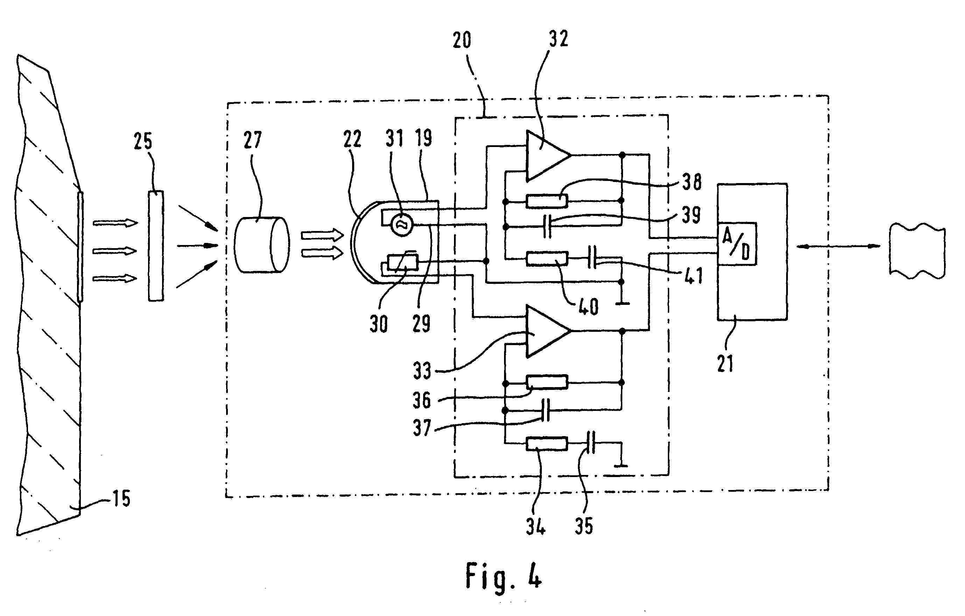

Aus Figur 4 ist die elektrische Schaltung der vorliegenden Erfindung dargestellt. Die vom Fahrgastraum 15 ausgesandte Wärmestrahlung wird über das Infrarotfilter 25 und die Spiegeloptik 27 auf den Infrarotsensor 19 geleitet, welches von dem Infrarotfilter 22 in Strahlrichtung abgeschlossen ist. Der Infrarotsensor 19 besteht aus einem, die sensitive Fläche des Infrarotsensors bildenden Thermopileelement 31, welches die Temperatur bestimmt. Neben dem Thermopileelement 31 ist ein Referenzelement 30 angeordnet, daß aufgrund seiner räumlichen Nähe die Referenztemperatur des kalten Thermoschenkels 29 des Thermopileelementes 31 und somit die Wärmesenke bestimmt. Die sich anschließende Verstärkerschaltung 20 weist dabei zwei Verstärkerzweige auf.

Die Sensorausgänge des Thermopileelementes 31 sind dabei einmal an Masse und einmal an den Operationsverstärker 32 geschaltet, während ein Sensorausgang des Referenzelementes 30 mit dem kalten Schenkel 29 des Thermopileelements 31 verbunden ist, welches an Masse führt. Der zweite Anschluß des Referenzelementes 30 ist mit einem zweiten Operationsverstärker 33 verbunden. Der Operationsverstärker 32 ist über eine Netzwerkschaltung, bestehend aus den Widerständen 38 und 40 und den Kondensatoren 39 und 41 mit dem Mikroprozessor 21 verbunden. Der Ausgang des Operationsverstärkers 33, welcher über ein Netzwerk, bestehend aus den Kondensatoren 37 und 35 und den Widerständen 34 und 36 rückgekoppelt ist, führt ebenfalls auf den A/D-Wandlereingang des Mikroprozessor 21. Mittels des Mikroprozessors 21 erfolgt eine digitale Kompensation des Temperatursignales. Wie bereits beschrieben, steuert der Mikroprozessor 21 in Abhängigkeit eines Vergleiches der gemessenen Innentemperatur mit der gewünschten Innenraumtemperatur ein Stellelement, beispielsweise ein Heizventil oder die Mischluftklappe an.

Wie aus Figur 1 ersichtlich, kann die Detektion der Temperatur im Fahrgastraum 15 ebenfalls in einen Multizonenbetrieb folgen. Dazu weist das Infrarotfilter 25 mehrere Bereiche 42, 43 auf, die im Winkel zueinander stehen und einerseits die Temperatur im Fahrer- und andererseits im Beifahrerbereich messen. Somit kann das subjektive Wärmebefinden der Insassen im Fahrgastraum 15 für jede Person gesondert ermittelt und eingestellt werden. Die daraus resultierende Reaktion des Heizungs- und Klimasteuergerätes 7 kann sowohl zu einer Änderung im Gesamtbereich der Insassen, als auch zu einer Änderung jeweils in den betroffenen Bereichen der einzelnen Insassen führen.

Der Sensor sowie die benötigte Auswerte- und Kompensationsschaltung befindet sich direkt auf der Leiterplatte des Klimagerätes und ist somit integraler Bestandteil der gesamten Heizungs-, Lüftungs- und Klimagerätesteuerung.

### Bezugszeichenliste

- 1.: Klimagerät
- 2.: Frischluftklappe
- 3.: Umluftklappe
- 4.: Ventilator
- 5.: Mischluft
- 6.: Verdampfer
- 7.: Klimasteuergerät
- 8.: Wärmetauscher
- 9.: Temperaturklappe
- 10.: Ausströmer
- 11.: Luftverteilerklappen
- 12.: Kraftfahrzeug
- 13.: Stellmotor
- 14.: Stellmotor
- 15.: Fahrgastraum
- 16.: Leiterplatte
- 17.: 17. Halterung
- 18.: Halterung
- 19.: Infrafrotsensor
- 20.: Verstärkeranordnung
- 21.: Mikroprozessor
- 22.: Infrarotfilter
- 23.: Bedienelement
- 24.: elektrische Leitung
- 25.: Infrarotfilter
- 26.: Abdeckung des Gehäuses
- 27.: 27. Spiegeloptik
- 28.: Halterung
- 29.: kalter Thermoschenkel vom Thermopilelement
- 30.: Referenzelement
- 31.: . Thermopilelement
- 32.: Operationsverstärker
- 33.: Operationsverstärker
- 34.: . Widerstand
- 35.: Kondensator
- 36.: . Widerstand
- 37.: Kondensator
- 38.: . Widerstand
- 39.: Kondensator
- 40.: Widerstand
- 41.: Kondensator
- 42.: Bereich des Infrarotfilter 25
- 43.: Bereich des Infrarotfilter 25
- 44.: Frontplatte
- 45: Gehäuse

## Patentansprüche

1. Anordnung zum Regeln der Innenraumtemperatur im Fahrgastraum eines Kraftfahrzeuges, bei welcher die von einem Strahlungssensor detektierte tatsächliche Innenraumtemperatur einer Regelschaltung zugeführt wird, welche in Abhängigkeit der gemessenen Temperatur und einer vorgegebenen Temperatur die Temperatur im Fahrzeuginnenraum einstellt, **dadurch gekennzeichnet, daß** der Strahlungssensor (19) auf einer die Regelschaltung (21) tragenden Leiterplatte (16) so angeordnet ist, daß eine sensitive Fläche (31) des Strahlungssensors (19) die Wärmestrahlung detektiert, welche auf eine dem Fahrzeuginnenraum (15) zugewandte Außenfläche (44) eines die Leiterplatte (16) umschließenden Gehäuses (45) auftrifft.

2. Anordnung nach Anspruch 1, **dadurch gekennzeichnet, daß** der Strahlungssensor (19) ein in einem Sensorgehäuse (46) angeordneter Infrarotdetektor ist, wobei das Sensorgehäuse durch ein Infrarotstrahlungsfilter (22) abgeschlossen ist, welches der sensitiven Fläche (31) des Strahlungssensors (19) gegenüberliegt.

3. Anordnung nach Anspruch 2, **dadurch gekennzeichnet, daß** im Sensorgehäuse (46) als sensitive Fläche ein Thermopileelement (31) angeordnet ist, dem ein Temperaturreferenzelement (30) zugeordnet ist, wobei die vom Thermopileelement (31) und dem Temperaturreferenzelement (39) erzeugten elektrischen Signale über eine auf der Leiterplatte (16) angeordnete Verstärkerelektronik (20) an die Regelschaltung (21) geführt sind.

4. Anordnung nach Anspruch 1, 2 und 3 **dadurch gekennzeichnet, daß** die auf die Außenfläche (44) des die Leiterplatte (16) umschließenden Gehäuses (46) auftreffende Wärmestrahlung über ein in die Außenfläche (44) integriertes Strahlungsfilter (22, 25) erfaßt und auf die sensitive Fläche (31) des Strahlungssensors (19) weitergeleitet wird.

5. Anordnung nach Anspruch 1 bis 4, **dadurch gekennzeichnet, daß** das Sensorgehäuse (46) den Rand der Leiterplatte (16) in Richtung der Außenfläche (44) des die Leiterplatte (16) umschließenden Gehäuses (45) überragt, und das Infrarotstrahlungsfilter (22) des Strahlungssenors (19) zur Aufnahme der aus dem Fahrzeuginnenraum (15) auftreffenden Strahlung in die Außenfläche (44) des die Leiterplatte (16) umschließenden Gehäuses (45) integriert ist.

6. Anordnung nach Anspruch 5, **dadurch gekennzeichnet, daß** das Infrarotstrahlungsfilter (22) des Strahlungssensors (19) einstückig mit der Außenfläche (44) des die Leiterplatte (16) umschließenden Gehäuses (45) ausgebildet ist.

7. Anordnung nach Anspruch 1 bis 4, **dadurch gekennzeichnet, daß** das Sensorgehäuse (46) derart auf der Leiterplatte (16) angeordnet ist, daß das Infrarotstrahlungsfilter (22) des Strahlungssensors (19) annähernd parallel zur Oberfläche der Leiterplatte (16) verläuft, wobei in die Außenfläche (44) des die Leiterplatte (16) umschließenden Gehäuses (45) ein zweites Infrarotstrahlungsfilter (25) intergriert ist, welches die auf die Außenfläche (44) auftreffende Wärmestrahlung über eine in dem die Leiterplatte (16) umschließenden Gehäuse (45) angeordnete Wärmestrahlumlenkeinrichtung (27) auf das Infrarotfilter (22) des Strahlungssensors (19) führt.

8. Anordnung nach Anspruch 7, **dadurch gekennzeichnet, daß** die Wärmestrahlungsumlenkeinrichtung (27) an dem die Leiterplatte (16) umgebenden Gehäuse befestigt (45) ist.

9. Anordnung nach Anspruch 2 bis 8 **dadurch gekennzeichnet, daß** mehrere Strahlungssensoren zur Detektion verschiedener Bereiche des Fahrgastraumes (15) auf der die Regelschaltung (21) tragenden Leiterplatte (16) angeordnet sind.

10. Anordnung nach Anspruch 1, **dadurch gekennzeichnet, daß** die Regelschaltung (21) die gesamte Heizungs-, Lüftungs- und Klimasteuerung des Kraftfahrzeuges regelt.

## Claims

1. Arrangement for regulating the temperature inside a passenger compartment of an automobile, in which the actual inside temperature detected by a radiation sensor is supplied to a regulating circuit which sets the temperature inside the vehicle as a function of the measured temperature and a predetermined temperature, **characterized in that** the radiation sensor (19) is arranged on a printed circuit board (16), which bears the regulating circuit (21), in such a manner that a sensitive surface (31) of the radiation sensor (19) detects the thermal radiation which occurs on an outer surface (44), which faces the inside of the vehicle (15), of a housing (45) surrounding the printed circuit board (16).

2. Arrangement according to Claim 1, **characterized in that** the radiation sensor (19) is an infrared detector arranged in a sensor housing (46), the sensor housing being closed by an infrared radiation filter (22) which lies opposite the sensitive surface (31) of the radiation sensor (19).

3. Arrangement according to Claim 2, **characterized in that** a thermopile element (31) to which a temperature reference element (30) is assigned is arranged as the sensitive surface in the sensor housing (46), the electric signals produced by the thermopile element (31) and the temperature reference element (39) being passed to the regulating circuit (21) via an electronic booster unit (20) arranged on the printed circuit board (16).

4. Arrangement according to Claims 1, 2 and 3, **characterized in that** the thermal radiation occurring on the outer surface (44) of the housing (46) surrounding the printed circuit board (16) is detected via a radiation filter (22, 25), which is integrated in the outer surface (44), and is passed on to the sensitive surface (31) of the radiation sensor (19).

5. Arrangement according to Claims 1 to 4, **characterized in that** the sensor housing (46) projects over the edge of the printed circuit board (16) in the direction of the outer surface (44) of the housing (45) surrounding the printed circuit board (16), and the infrared radiation filter (22) of the radiation sensor (19) is integrated in the outer surface (44) of the housing (45) surrounding the printed circuit board (16) in order to record the radiation emerging from the inside of the vehicle (15).

6. Arrangement according to Claim 5, **characterized in that** the infrared radiation filter (22) of the radiation sensor (19) is formed integrally with the outer surface (44) of the housing (45) surrounding the printed circuit board (16).

7. Arrangement according to Claims 1 to 4, **characterized in that** the sensor housing (46) is arranged on the printed circuit board (16) in such a manner that the infrared radiation filter (22) of the radiation sensor (19) runs approximately parallel to the surface of the printed circuit board (16), a second infrared radiation filter (25) being integrated in the outer surface (44) of the housing (45) surrounding the printed circuit board (16), which filter guides the thermal radiation occurring on the outer surface (44) via a thermal-radiation-deflecting device (27), which is arranged in the housing (45) surrounding the printed circuit board (16), to the infrared radiation filter (22) of the radiation sensor (19).

8. Arrangement according to Claim 7, **characterized in that** the thermal-radiation-deflecting device (27) is fastened to the housing (45) surrounding the printed circuit board (16).

9. Arrangement according to Claims 2 to 8, **characterized in that** a plurality of radiation sensors for detecting different regions of the passenger compartment (15) are arranged on the printed circuit board (16) bearing the regulating circuit (21).

10. Arrangement according to Claim 1, **characterized in that** the regulating circuit (21) regulates the overall heating, ventilation and air conditioning control system of the automobile.

## Revendications

1. Système permettant de réguler la température à l'intérieur de l'habitacle d'un véhicule automobile, où la température effective à l'intérieur de l'habitacle détectée par un capteur de rayonnement est appliquée à un circuit de régulation, lequel règle la température à l'intérieur de l'habitacle en fonction de la température mesurée et d'une température prédéterminée, **caractérisé par le fait que** le capteur de rayonnement (19) est disposé sur une carte à circuits imprimés (16) supportant le circuit de régulation (21) de telle manière qu'une surface sensible (31) du capteur de rayonnement (19) détecte le rayonnement thermique qui tombe sur une surface extérieure (44), tournée vers l'habitacle du véhicule (15), d'un boîtier (45) englobant la carte à circuits imprimés (16).

2. Système selon la revendication 1 **caractérisé par le fait que** le capteur de rayonnement (19) est un détecteur à infrarouge disposé dans un boîtier de capteur (46), le boîtier de capteur étant fermé par un filtre (22) à rayonnement infrarouge, qui se trouve en face de la surface sensible (31) du capteur d e rayonnement (19).

3. Système selon la revendication 2 **caractérisé par le fait que**, dans le boîtier de capteur (46), est disposé, en tant que surface sensible, un élément thermopile (31) auquel correspond un élément de référence de température (30), les signaux électriques produits par l'élément thermopile (31) et l'élément de référence de température (39) étant appliqués, à travers un système électronique d'amplification (20) disposé sur la carte à circuits imprimés (16), au circuit de régulation (21).

4. Système selon la revendication 1, 2 et 3 **caractérisé par le fait que** le rayonnement thermique incident sur la surface extérieure (44) du boîtier (46) englobant la carte à circuits imprimés (16) est détecté par un filtre de rayonnement (22, 25) intégré dans la surface extérieure (44) et est guidé sur la surface sensible (31) du capteur de rayonnement (19).

5. Système selon la revendication 1 à 4 **caractérisé par le fait que** le boîtier de capteur (46) fait saillie du bord de la carte à circuits imprimés (16) dans la direction de la surface extérieure (44) du boîtier (45) englobant la carte à circuits imprimés (16) et que le filtre à rayonnement infrarouge (22) du capteur de rayonnement (19) est intégré, pour recevoir le rayonnement incident provenant de l'habitacle (15) du véhicule, dans la surface extérieure (44) du boîtier (45) englobant la carte à circuits imprimés (16).

6. Système selon la revendication 5 **caractérisé par le fait que** le filtre à rayonnement infrarouge (22) du capteur de rayonnement (19) est conçu en une seule pièce avec la surface extérieure (44) du boîtier (45) englobant la carte à circuits imprimés (16).

7. Système selon la revendication 1 à 4 **caractérisé par le fait que** le boîtier de capteur (46) est disposé sur la carte à circuits imprimés (16) de telle manière que le filtre à rayonnement infrarouge (22) du capteur de rayonnement (19) est approximativement parallèle à la surface de la carte à circuits imprimés (16), un deuxième filtre à rayonnement infrarouge (25) étant intégré dans la surface extérieure (44) du boîtier (45) englobant la carte à circuits imprimés (16), ce deuxième filtre à rayonnement infrarouge (25) orientant le rayonnement thermique incident sur la surface extérieure (44), par l'intermédiaire d'un dispositif de déviation du rayonnement thermique (27) placé dans le boîtier (45) englobant la carte à circuits imprimés (16), sur le filtre à infrarouge (22) du capteur de rayonnement (19).

8. Système selon la revendication 7 **caractérisé par le fait que** le dispositif de déviation du rayonnement thermique (27) est fixé sur le boîtier (45) englobant la carte à circuits imprimés (16).

9. Système selon la revendication 2 à 8 **caractérisé par le fait que** plusieurs capteurs de rayonnement sont disposés sur la carte à circuits imprimés (16) portant le circuit de régulation (21) pour détecter diverses zones de l'habitacle (15).

10. Système selon la revendication 1 **caractérisé par le fait que** le circuit de régulation (21) règle l'ensemble de la commande du chauffage, de la ventilation et de la climatisation du véhicule automobile.
